Europäisches Patentamt

European Patent Office

Office européen des brevets

(11) Publication number: **0 302 841**
**A2**

## EUROPEAN PATENT APPLICATION

(21) Application number: 88830330.2

(22) Date of filing: 28.07.88

(51) Int. Cl.⁴: **G 01 N 23/02**

(30) Priority: 04.08.87 IT 4009987

(43) Date of publication of application:
08.02.89 Bulletin 89/06

(84) Designated Contracting States: **BE DE FR GB SE**

(71) Applicant: **Fratta, Franco**
**Via Caduti di Cefalonia, 3/B**
**I-43036 Fidenza (Parma) (IT)**

(72) Inventor: **Fratta, Franco**
**Via Caduti di Cefalonia, 3/B**
**I-43036 Fidenza (Parma) (IT)**

(74) Representative: **Lanzoni, Luciano**
**c/o BUGNION S.p.A. Viale Trento Trieste, 25**
**I-41100 Modena (IT)**

(54) **A device for the control and automatic positioning of equipment trolleys used in verifying pipeline weldments by radiography.**

(57) The welded joints of newly constructed pipelines are verified by X-ray, utilizing equipment mounted to a self-propelled trolley that travels along the bore; the trolley is controlled and positioned using a magnetic source (1) applied by hand to the outside of the pipeline, and a receiver (5), located inside the pipeline, which consists in two coils (6, 7) suitably spaced apart and fitted to the trolley in such a way as to be invested by the magnetic field generated externally of the pipe wall.

## Description

**A device for the control and automatic positioning of equipment trolleys used in verifying pipeline weldments by radiography**

The invention relates to a device for controlling and positioning the equipment trolleys used in X-ray verification of pipeline weldments.

Conventional radiographic methods of verifying the quality of welded joints in pipelines, such as in oil and gas pipeline construction, involves the use of a power driven trolley that is able to travel internally of the pipeline, negotiating straights and bends alike. The trolley carries radiography apparatus, usually X-ray, and a plate is exposed at each of the welded joints between successive pipes. Faultless positioning of the trolley alongside the joints as it proceeds along the pipeline is achieved currently by a method that is potentially dangerous, and hazardous for the operator carrying out the radiography. A radioactive source is positioned by the operator on the outside of the pipe, adjacent to the weld, whilst the trolley carries a radioactivity detector, such as a Geiger counter. The trolley enters the pipeline at one end, and as it moves off, begins emitting a continuous audio signal to inform the operator that it is moving, and approaching the first weldment. The drive system is interlocked to the Geiger counter, such that the trolley can be stopped directly alongside the radioactive source, where radiation is at maximum. The source will not be positioned directly in line with the weldment, in effect, but offset by a distance equal to that which separates the Geiger counter and the X-ray apparatus on the trolley.

As the trolley thus positions itself alongside the weldment, the continuous audio signal will cease, informing the operator that the apparatus is in the exact position for an exposure; the operator now removes the source from the pipe and withdraws from the area. At this juncture, an intermittent audio signal is emitted for a duration long enough to enable the operator to retire to a safe distance, and as soon as the intermittent signal ceases, the X-ray apparatus will operate. This accomplished, the trolley passes on without delay to the next joint, once again emitting the continuous audio signal to inform the operator of its movement.

The procedure thus described betrays a number of drawbacks, attributable mainly to the fact that the operator has to handle a radioactive source of not inconsiderable intensity (gamma radiation emitted by iridium, or cobalt, or caesium).

Whilst it is true that the source is carried in a lead casing, a necessity that in itself signifies notable weight and difficulties experienced with transportation, there is always a certain amount of radiation emitted, and the operator has to exercise great care when handling the medium, keeping it as far away as possible from his own person.

Other drawbacks arise with the storage of these radioactive sources, which must be transported in specially designed vehicles and accompanied by an official authorization. Also, materials of the type in question must be kept in purpose-built radiation-proof enclosures both during transportation and when not in use.

Another drawback, with iridium in particular, stems from the fact that the source must be recharged at intervals of a few months.

Attempts have been made to defeat these difficulties connected with the use of radioactive materials, by adopting an external control consisting in a horse shoe shaped permanent magnet, or an electromagnet, emitting a field that can be inverted simply by turning the magnet itself through 180°, and fitting the trolley with a three-position magnetic compass wired into its electronic control equipment.

This magnetic system has found little success in terms of practical application, since the permanent magnetic generates a static field, and the pointer of the compass is affected by residual magnetism in the pipe metal, in the permanent magnet itself, from manufacturing operations, and/or from other external magnetic fields.

Accordingly, the object of the invention is one of positioning the equipment trolley at each weldment of a pipeline as it travels along the bore, without utilizing a radioactive source, thereby avoiding the hazards of contamination and dispensing with the special means of transportation and storage that are required for radioactive materials.

The stated object is realized comprehensively with a device as characterized in the appended claims, which serves to control and position a radiography equipment trolley of the type utilized in pipeline construction for verifying welded joints.

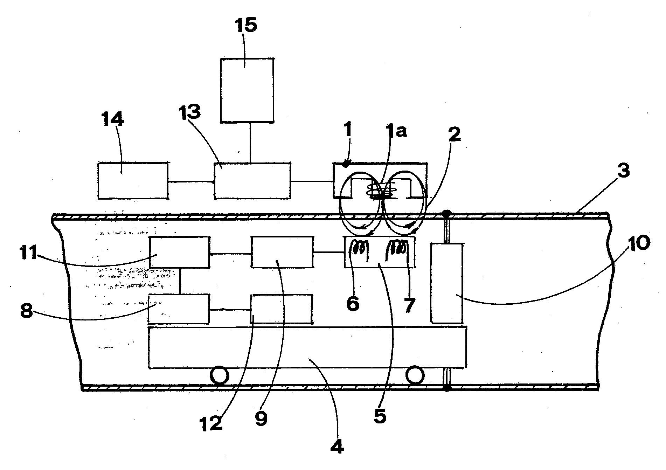

The invention will now be described in detail by way of example with the aid of the accompanying drawing, which is a schematic representation of the device, viewed in position alongside a pipeline weldment to be X-rayed.

With reference to the drawing, 1 denotes a source by which a magnetic field is generated, consisting in an electromagnet of 'E' shape, in which excitation, denoted 1a, is produced through the central member of the 'E'.

The electromagnet generates a variable field, in which the lines of flux 2 converge coincident with the outer members of the 'E' (as illustrated in the drawing), passing through the wall of the pipe 3 and occupying a portion of the space encompassed by the pipe itself.

The trolley 4, which is conventional in embodiment and equipped with the usual control and radiography equipment, also carries a receiver circuit 5 in the form of a coil, which is designed to pick up the magnetic field generated by the external source 1. More exactly, the receiver circuit 5 consists in two coils 6 and 7 set apart one from the other, in which two respective electromotive forces are induced when the receiver is located alongside the source of the magnetic field. The two emfs induced in this fashion will stay out of phase with one another as long as the relative positioning of the two coils 6 and 7 and the electromagnet 1 remains non-symmetrical. 8 denotes a microprocessor into which the receiver 5 is cascaded by way of an amplifier 9 and filter 11; the moment any voltage registers at the terminals of the coils, the microprocessor will operate, and emit a signal to trigger the application of the trolley brake, thus bringing about deceleration. As long as the voltages running through the coils remain out of phase, the trolley will continue travelling at low speed; the moment the leading coil 7 passes beyond the central member of the 'E' electromagnet however, the relative emf will invert abruptly, bringing the voltages through the two coils 6 and 7 into phase.

The microprocessor 8 immediately recognizes the changed situation, and gates a signal that triggers shut-down of the trolley drive motor 12.

The phased type control system thus described avoids any possibility of the microprocessor 8 operating in response to external interference that may happen to pass through the filter 9; the distance separating the two coils 6 and 7 will match the dimensions of the magnetic circuit consituting the source.

Once the trolley 4 has drawn to a standstill, the microprocessor 8 will proceed to deactivate the conventional on-board device by which the continuous audio signal is generated, and a pause is triggered in which to allow the operator to push the button that activates the radiography apparatus.

The electromagnet is excited by a power unit 14, driving an amplifier 13 that is piloted by a further micro-processor 15; it has been found preferable to apply square wave at 20Hz to avoid the regular 50Hz frequency of the power supply, which is liable to produce higher frequency harmonics; the same low frequency is used for the remaining manoeuvres.

The control and positioning device thus disclosed might alternatively feature a receiver with one coil only, in which case the control signal that brings the trolley to a stop will be produced when the emf through the single coil registers at zero, or at a given minimum value.

The further option exists of dispensing with the two coils and utilizing two Hall effect transducers.

**Claims**

1) A device for the control and automatic positioning of equipment trolleys used in verifying pipeline weldments by radiography,
characterized
in that it comprises:
-a source (1) of magnetism, from which to generate a variable magnetic field with lines of flux that converge in part externally, and in part internally of the space encompassed by the pipe wall (3);
-a receiver (5), mounted to and adjustable for position on the trolley that carries the radiography apparatus, consisting substantially in a device that is invested by the lines of flux of the magnetic field and producing at least one voltage that varies in strength according to the number of concatenated lines of flux.

2) A device as in claim 1, wherein the receiver (5) consists substantially in one or more coils (6, 7).

3) A device as in claim 1, wherein the receiver (5) consists in two coils set apart at a given distance.

4) A device as in claim 1, wherein the receiver (5) consists in two Hall effect transducers.

5) A device as in claim 1, comprising a source (1) from which to generate a magnetic field that consists substantially in an electromagnet with an E-shaped magnet circuit in which excitation (1a) is produced through the central member of the 'E' in such a way as to generate lines of flux (2) that loop together coincident with the two outer members of the 'E', passing through the pipe wall and occupying a part of the space encompassed thereby.

6) A device as in claim 1, wherein the source (1) from which the magnetic field is generated comprises a power unit (14) the output of which is cascaded into an amplifier (13) piloted by a microprocessor (15).

7) A device as in claim 1, wherein the receiver (5) comprises a microprocessor (8) designed to detect any change in phase of the voltages induced in the two spaced coils, and to respond by triggering the operation either of the brakes or of the drive motor of the trolley.